# EUROPEAN PATENT SPECIFICATION

(11) **EP 2 317 747 B1**
(45) Date of publication and mention of the grant of the patent: **14.08.2019**
(21) Application number: 08877235.5
(22) Date of filing: 22.12.2008
(51) Int. Cl.: H04M 3/42

(54) **A REALIZING METHOD AND APPARATUS FOR VIDEO PHONE**
VERFAHREN UND VORRICHTUNG FÜR EIN BILDTELEFON
PROCÉDÉ ET DISPOSITIF DE VISIOPHONIE.

(30) Priority: 10.10.2008 CN 200810167489
(43) Date of publication of application: 04.05.2011
(73) Proprietor: ZTE Corporation, Shenzhen, Guangdong 518057 (CN)
(72) Inventor: LIU, Yi, Guangdong 518057 (CN); LIU, Lizhang, Guangdong 518057 (CN); ZHAO, Jing, Guangdong 518057 (CN)
(74) Representative: Dehns
(86) International application number: PCT/CN2008/073649
(87) International publication number: WO 2010/040266

(56) References cited:
- EP-A2- 1 170 948
- WO-A1-00/79796
- WO-A1-02/37848
- WO-A1-2007/029126
- CN-A- 1 187 090
- CN-A- 1 360 445
- US-A1- 2008 007 192

## Description

### TECHNICAL FIELD

The present invention relates to the field of communications and specifically relates to a method and apparatus for realizing a video phone.

### BACKGROUND

A video phone service is a multimedia communications service integrating image and voice. Through a video phone service, people can realize instantaneous face-to-face communication, i.e. each party in a call can see each other. A video phone can be realized by means of a packet or a circuit. At present, the video phone service required in a Wideband Code Division Multiple access (WCDMA) network refers to a video phone service realized based on a Circuit Switching (CS) bearer.

Calls can be classified into the following types according to a calling party and a called party:
a call between mobile terminals: both a calling party and a called party are mobile terminals and this call complies with H.324 protocol;
a call between a mobile terminal and a video gateway: the mobile terminal may be either a calling party or a called party and this call complies with H.324 protocol; if the mobile terminal is a calling party, it typically supports two-stage dialing.

Further, if an operator provides a video mail service, a mobile terminal can obtain the content of a video mail by calling the video mail platform.

When a calling party and a called party initiate a video phone call, firstly the two parties establish a physical path through a call process and then perform interaction of control signals (H.245). The sending party transmits signals and, after cutting (adopting the Control Channel Segmentation and Reassembly Layer (CCSRL) protocol) and sequencing (adopting the Numbered Simple Retransmission Protocol (NSRP)), through multiplexing (H.223), the signals are transmitted to the receiving party via a physical layer. The receiving party collects in sequence (adopting the NSRP) and combines (adopting the CCSRL protocol) the signals, performs interaction through control signals and completes the establishment of a video phone path. In this way, the two parties can realize visual interaction with each other through a media codec when receiving video/audio signals from the other party.

At present, the WCDMA technology has been massively applied all over the world, its one advantage is that a high-speed Packet Switching (PS) service can be provided, and the downlink speed of High Speed Downlink Packet Access (HSDPA) has reached 7.2M. Relying on the high-speed feature of PS, WCDMA wireless data cards have got wide application.

However, the functions of the current used wireless data cards are too simple and the main functions are limited to MODEM Internet access, SMS, voice call and other simple functions. In fact, a WCDMA network also provides abundant applications to users besides a high speed. Unfortunately, the current users using wireless data cards are unable to enjoy these rich applications because of the limited functions of these network cards. To make these applications available, the users have to buy a special terminal, thus their expenditure will increase. As the video phone service is only limited to be applicable to telephones (e.g. fixed phones, mobile phones, etc.), it cannot be extended to Personal Computer (PC) terminals (desktop or laptop).

So far, no effective solution has been provided to solve the problem that wireless data cards only have simple functions and are not compatible with a plurality of applications.

WO 02/37848 A1 discloses a method of transferring between communication channels of differing bandwidth. WO 00/79796 A1 discloses a wireless videophone, which comprises a landline-based videophone, a transceiver, and a converter. EP 1 170 948 A2 discloses a radio communication apparatus having a videophone function and a usual phone function.

### SUMMARY

The present invention intends to provide a method and apparatus for realizing a video phone to solve the problems in the related art that wireless data cards only have simple functions and are not compatible with a plurality of applications.

According to one aspect of the present invention, a method as in claim 1 for realizing a video phone in a WCDMA network according to 3GPP standard protocol is provided.

According to another aspect of the present invention, an apparatus as in claim 6 for realizing a video phone in a WDCMA network according to 3GPP standard protocol is also provided.

### BRIEF DESCRIPTION OF THE DRAWINGS

The drawings described here are intended to provide further understanding on the present invention and constitute a part of this application. The schematic embodiments of the present invention and their descriptions are intended to explain the present invention and not to limit the present invention improperly. Among the drawings:
FIG. 1 is a flow chart of a method for realizing a video phone according to an embodiment of the present invention;
FIG. 2 is a schematic diagram of a protocol flow of initiating a video phone call through a wireless data card according to an embodiment of the present invention;
FIG. 3 is a block diagram of an apparatus for realizing a video phone according to an embodiment of the present invention;
FIG. 4 is a block diagram of an apparatus for realizing a video phone according to a preferred embodiment of the present invention;
FIG. 5 is a block diagram of an apparatus for realizing a video phone according to an embodiment of the present invention;
FIG. 6 is a block diagram of another apparatus for realizing a video phone according to an embodiment of the present invention; and
FIG. 7 is a structure block diagram of each functional module of an apparatus for realizing a video phone according to an embodiment of the present invention.

### DETAILED DESCRIPTION

### Function Overview

As described above, the present invention provides a video phone realization solution to solve the foregoing problem that wireless data cards only have simple functions and are not compatible with a plurality of applications. The main idea of the realization solution is: by initiating a video phone call through a wireless data card which is used as a radio bearer realization tool and by realizing the protocol, encoding, decoding and other functions of the video phone through a PC, the PC can realize the functions of the video phone, thereby improving the user experience and saving the user's cost.

If there is no conflict, the embodiments of the present invention and the characteristics in the embodiments can be combined with each other.

The preferred embodiments of the present invention are illustrated below in connection with the figures. It should be understood that the preferred embodiments described here are intended to illustrate and explain the present invention, and not to limit the present invention.

### Method Embodiment

According to an embodiment of the present invention, a method for realizing a video phone is provided.

It should be noted that the wireless data card according to an embodiment of the present invention is a WCDMA wireless network card. The network card per se can support a CS calling service. The equipment on the local side is a PC.

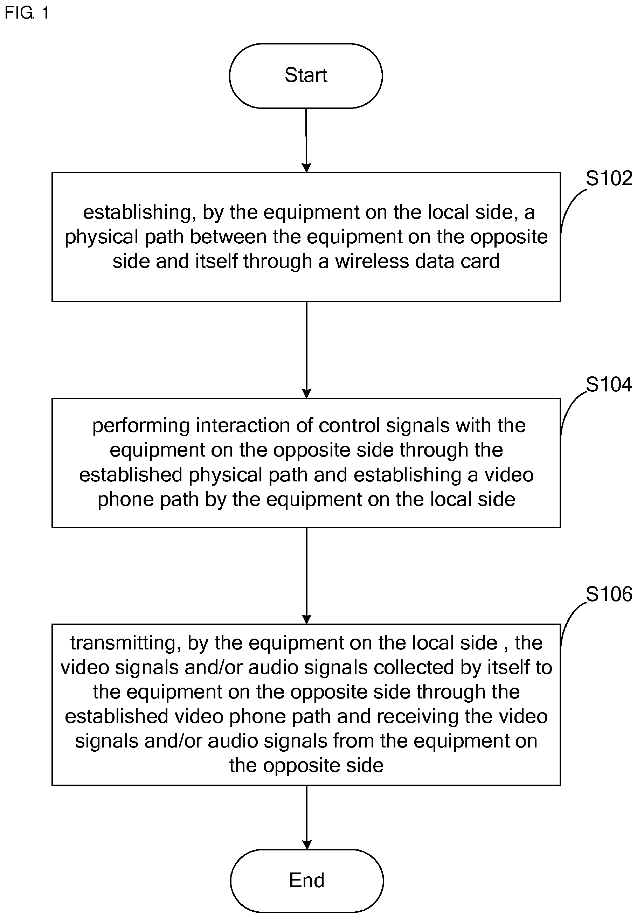

FIG. 1 is a flow chart of a method for realizing a video phone according to an embodiment of the present invention. It should be noted that, for easy description, the technical solution of the method embodiment of the present invention is shown and described in the form of steps in FIG. 1, and the steps shown in FIG. 1 can be executed via a computer system in which a group of instructions are executable by computers, for example. Although a logical sequence is shown in FIG. 1, in some cases, the illustrated or described steps may be executed in a sequence different from the sequence described here. As shown in FIG. 1, the method comprises the following steps (S102∼S106).

S102, an equipment on the local side establishes a physical path between equipment on the opposite side and itself through a wireless data card;
S104, the equipment on the local side performs interaction of control signals with the equipment on the opposite side through the established physical path and establishes a video phone path; and
S106, the equipment on the local side transmits the video signals and/or audio signals collected by itself to the equipment on the opposite side through the established video phone path, and receives video signals and/or audio signals from the terminal on the opposite side through the video phone path.

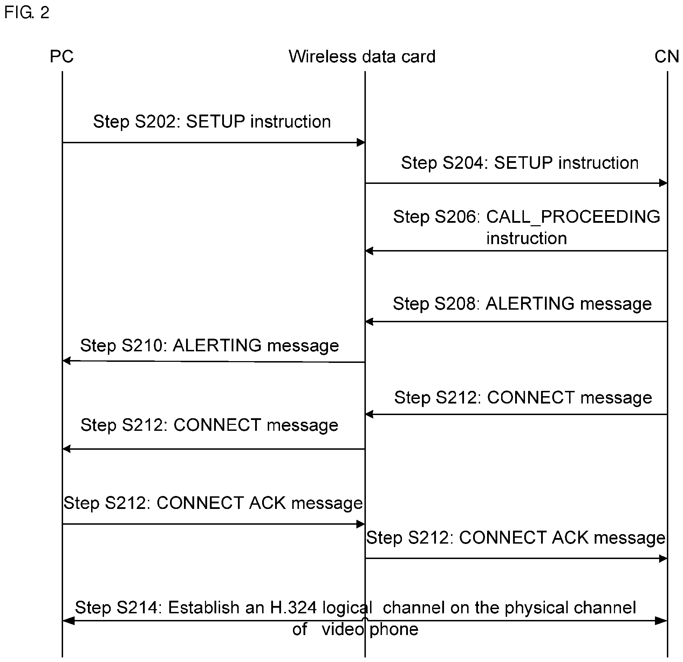

FIG. 2 shows the concrete process of S102 and S104 during a call in practical application. As illustrated in FIG. 2, a successful call comprises the following processing (S202∼S214).

S202: a user chooses to initiate a video phone call on a PC. Before the video phone call is initiated, PC software needs to check whether a camera is connected to the PC. If no camera is connected, PC software is required to give a prompt to the user. The user connects a camera according to this prompt. After the camera is connected and the user initiates a video phone call, the system control module of the PC software will send a video phone SETUP instruction to a network card control interface module on the network card side.

S204: after receiving the video phone SETUP instruction from the PC software, the network card control interface module on the network card side triggers the wireless network card and starts a series of radio bearer establishment processes according to the 3GPP (3rd Generation Partnership Project) standard protocol. After the radio bearer is established, the wireless network card sends the video phone SETUP instruction to a Core Network (CN).

S206: the CN sends a CALL_PROCEEDING instruction to the wireless network card and begins to page the called party.

S208: after a called radio bearer is established and a CALL_CONFIRMED message is returned to the CN, the CN sends an ALERTING message to the wireless network card. A wireless network card protocol module needs to forward the ALERTING message to the wireless network card control interface module.

S210: the wireless network card control interface module sends the ALERTING message to the system control module of the PC software. The PC software may send a ring back tone indicative of call connection to the user through an earphone or a loudspeaker connected to the PC.

S212: if the called party puts the call through, then the CN sends a CONNECT message to the wireless network card. The wireless network card control interface module forwards the CONNECT message to the system control module on the PC side. The system control module on the PC side sends a CONNECT ACK message to the wireless network card control interface module. The wireless network card forwards the CONNECT ACK message to the CN. By now, the process for supporting call establishment is completed and the software on the PC side begins to send the video information of the local side and receive the video information transmitted from the opposite side.

S214: after a call process is completed, the execution of an H.245 signaling process is started: end-to-end multiplexing-level exchange and opening a logical channel.

Below the concrete processing of S106 is illustrated respectively through the flows of transmitting and receiving video/audio signals of a video phone.

### I. A flow of transmitting a video phone

1. a video phone establishes a physical path through a call process and performs interaction of control signals (H.245); after the physical path is established, the PC software of the video phone begins to receive the audio signals transmitted from the video I/O equipment in Part A (for example, this I/O equipment may be a camera connected to the PC) to an image and audio I/O equipment (for example, this I/O equipment may be a microphone connected to the PC);
2. video receiving and format conversion are performed; currently, a video phone generally supports the transmission of images in Quarter Common Intermediate Format (15fps QCIF); PC software needs to edit and sort the images input by a camera into QCIF format and adjust the frame rate of video phone transmission according to a control protocol;
3. video and audio are encoded; specifically, audio and video can be encoded according to a protocol; in the embodiment of the present invention, the encoding of video and audio can be realized in a video codec module and an audio codec module in the PC software for the video phone;
4. through H.223 protocol, the encoded audio and video signals are multiplexed; in the embodiment of the present invention, this step can be realized in the PC software for the video phone; and
5. the multiplexed signals are transmitted to the other party through the physical path established by the wireless network card.

### II. A flow of receiving a video phone

1. the video phone establishes a physical path through a call process and performs interaction of control signals (H.245); after the video phone path is established, the wireless network card receives video phone signals from the physical channel of the other party;
2. the wireless network card transmits the video phone signals to the corresponding PC software; through H.223 protocol, the PC software de-multiplexes the received encoded audio and video signals of the video phone.
3. the de-multiplexed video signals and audio signals are transmitted to the video codec module and audio codec module to conduct the decoding operation; and
4. the decoded video signals are transmitted to the corresponding video display zone of the PC software and are played; the decoded audio signals are played directly through the loudspeaker or earphone of the PC.

Further, other functions of the video phone in a mobile terminal (such as a mobile phone) can be realized through PC software, for example:
1. local video files, pictures or local video may be selectively contained in the video content;
2. rotation is supported for the display of far-end and near-end image contents, and the rotation angles are 0° and 180°;
3. picture-in-picture is provided and is taken as local video automatically; the picture-in-picture may be located at the top left corner, top right corner, bottom left corner or bottom right corner of a video picture and may also be dynamically zoomed (60^{∗}60, 70^{∗}70, 80^{∗}80, 90^{∗}90, 100^{∗}100);
4. the displayed video contents (including picture-in-picture) can be dynamically switched over to local and far end;
5. the video recording function: video recording of video phone content is supported; the content of video recording may be near end, far end, or near end + far end; the supported formats for storing video recording files are H.263 and MPEG-4, and the formats are determined through configuration;
6. after the video phone is connected, the interface can provide a variety of adjustment functions of the camera: zoom, contrast and brightness, and provide the function of open/close local sound and image, and the function of controlling the quality of local and remote images;
7. the function of dynamic configuration: zoom of the displayed images: 1:10; brightness of the displayed images: 1:10; contrast of the displayed images: 1:10; sound open: near-end sound on/off; video open: video recording open/close; picture-in-picture: open/close; display switchover: far/near switchover; files sending: send video/file; high consistency/high picture quality; and start /end video recording.
8. static configuration: configuration of communications, configuration of video display (content and location), configuration of video rotation (near end and far end), selecting of video sources (camera, video files and image files), configuration of video recording contents, selecting of video recording formats, configuration of file selection, configuration of display switchover, and etc.

Through the foregoing embodiment, a PC can realize the functions of a video phone by initiating a video phone call through a wireless data card which is used as a radio bearer realization tool.

### Apparatus Embodiment

According to an embodiment of the present invention, an apparatus for realizing a video phone is provided.

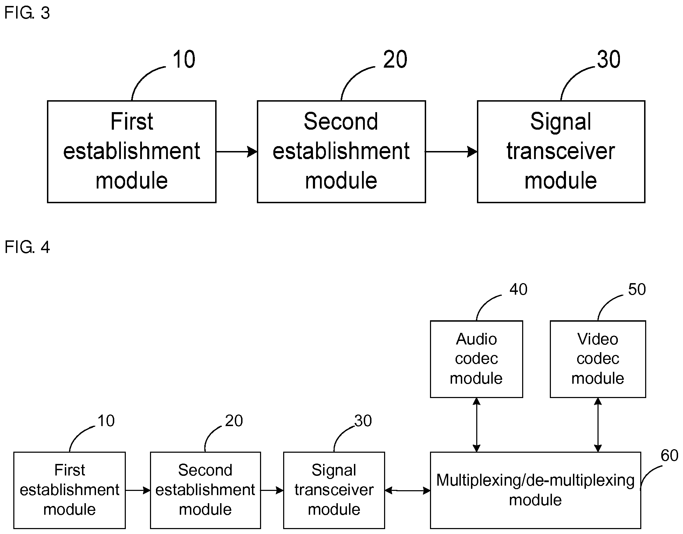

In a concrete implementation process, the realizing apparatus according to the embodiment of the present invention can be contained in a PC and a wireless data card. FIG. 3 is a block diagram of an apparatus for realizing a video phone according to an apparatus embodiment of the present invention. As shown in FIG. 3, the apparatus comprises a first establishment module 10, a second establishment module 20 and a signal transceiver module 30.

Wherein the first establishment module 10 is used to establish a physical path between an equipment on the opposite side and itself through a wireless data card; the second establishment module 20 is connected to the first establishment module 10 and used to perform the interaction of control signals with the equipment on the opposite side through the established physical path and establish a video phone path; and the signal transceiver module 30 is connected to the second establishment module 20 and used to transmit video signals and/or audio signals to the equipment on the opposite side and receive video signals and/or audio signals from the equipment on the opposite side through the video phone path established by the second establishment module 20.

FIG. 4 is a preferred structure block diagram of the apparatus shown in FIG. 3. As illustrated in FIG. 4, the apparatus also comprises an audio codec module 40, a video codec module 50 and a multiplexing/de-multiplexing module 60.

Specifically, the audio codec module 40 is used to encode the audio signals to be transmitted and decode the received audio signals; the video codec module 50 is used to encode the video signals to be transmitted and decode the received video signals; and the multiplexing/de-multiplexing module 60 is respectively connected to the audio codec module 40, the video codec module 50 and the signal transceiver module 30 and used to multiplex the audio signals and/or video signals encoded by the audio codec module 40 and the video codec module 50 and transmit them to the signal transceiver module 30, and de-multiplex the audio signals and/or video signals coming from the signal transceiver module 30 and transmit them to the audio codec module 40 and the video codec module 50.

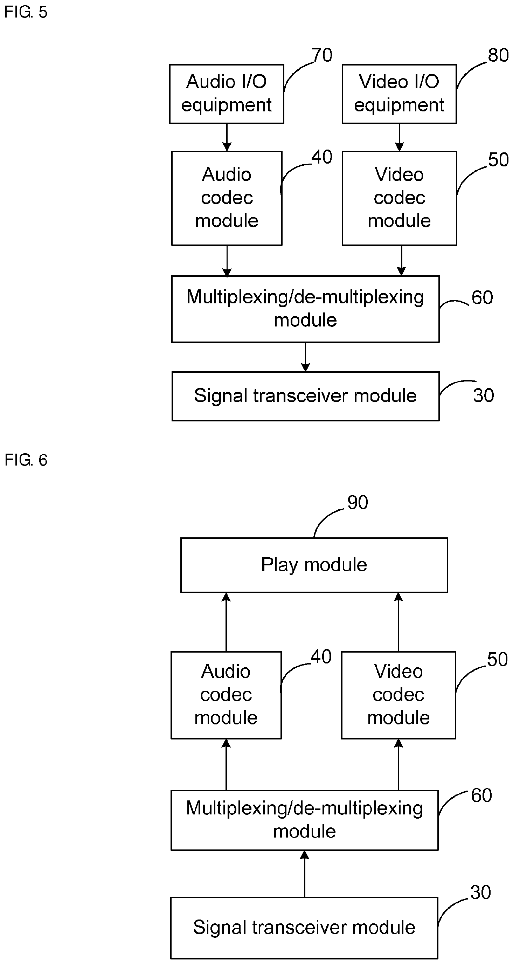

FIG. 5 is a structure block diagram of an apparatus for realizing a video phone according to an embodiment of the present invention. On the basis of the apparatus shown in FIG. 3, under the condition that the signal transceiver module 30 is used to transmit video signals and/or audio signals, as shown in FIG. 5, this realizing apparatus also comprises an audio I/O equipment 70 for collecting audio signals and transmitting the collected audio signals to the audio codec module 40, and a video I/O equipment for collecting video signals and transmitting the collected video signals to the video codec module 50, and a collection module 70 respectively connected to the audio codec module 40 and the video codec module 50 for collecting video signals through the video I/O equipment and audio signals through the audio I/O equipment, and transmitting the collected signals to the audio codec module 40 and/or the video codec module 50.

FIG. 6 is a structure block diagram of another apparatus for realizing a video phone according to an apparatus embodiment of the present invention. On the basis of the apparatus shown in FIG. 3, under the condition that the signal transceiver module 30 is used to receive video signals and/or audio signals, as shown in FIG. 6, this apparatus also comprises a play module 90 respectively connected to the audio codec module 40 and the video codec module 50 for playing the audio signals and/or video signals decoded by the audio codec module 40 and the video codec module 50.

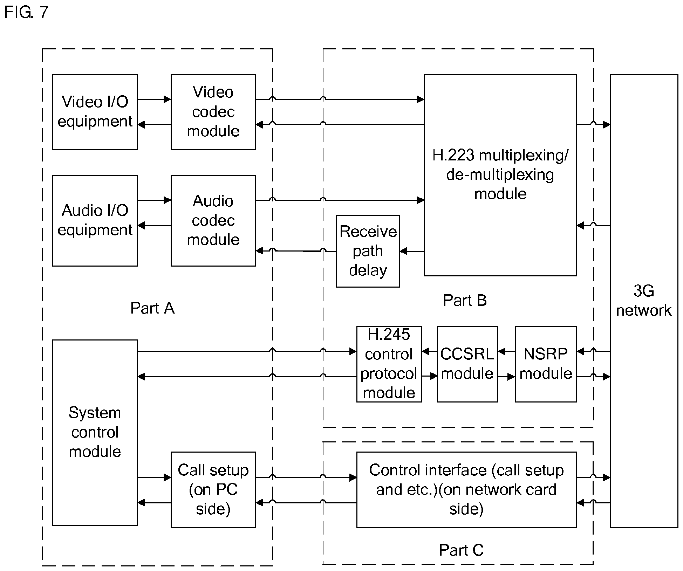

The solution for deploying each of the foregoing modules in a PC terminal is described hereinafter in details. Specifically, the relations among the videophone's protocols for media, control signals, call processing, multiplexing and so on are described in details by referring to FIG. 7.

FIG. 7 is a structure block diagram of the functional modules of an apparatus for realizing a video phone according to an embodiment of the present invention. As shown in FIG. 7, the functional modules of a video phone may be divided into three parts: Part A is the video phone functions transplanted from the terminal side to the PC side; Part B can be realized either on the PC side or on the network card side, considering the processing efficiency during application, it is preferred to put Part B on the PC side; Part C is a control interface module added in order to realize video phone functions, and may be located on the PC side. Part B and Part C interact with a 3G network, respectively.

Specifically, Part A comprises a video I/O module, an audio I/O module, a video codec module (adopting H.263 protocol), an audio codec module and a system control module, wherein audio coding/decoding may adopt AMR or other formats.

Part B comprises an H.223 multiplexing/de-multiplexing module, an H.245 control protocol module, a Control Channel Segmentation and Reassembly Protocol (CCSRL) module and a Numbered Simple Retransmission Protocol (NSRP) module, and receives path delay through these four modules.

Part C is a network card control interface module added mainly for cooperating with the PC side to realize video phone functions and parsing the control command (call SETUP) sent by the system control module of Part A.

Through the foregoing module deployment, the processing efficiency can be raised during a call.

To sum up, according to the foregoing technical solution of the present invention, by initiating a video phone call through a wireless data card which is used as a radio bearer realization tool and by realizing the protocol, coding, decoding and other functions of a video phone through a PC, the PC can realize the functions of the video phone, thereby improving the user experience and saving the user's cost.

Apparently, those skilled in the art should understand that the foregoing modules or steps of the present invention can be realized by general computing devices, they can be integrated in a single computing device or distributed in a network composed of a plurality of computing devices, optionally, they can be realized by program codes executable to computing devices, therefore, they can be stored in a storage device and executed by computing devices, or they can be realized by making them into separate Integrated Circuits (IC) modules, or making a plurality of them into a single IC module. In this way, the present invention is not limited to any specific combination of hardware and software.

The foregoing descriptions are embodiments of the present invention and are not intended to limit the present invention. For those skilled in the art, the present invention may have various changes and modifications within the scope of the invention, which is defined by the claims.

## Claims

1. A method for realizing a video phone in a WCDMA, Wideband Code Division Multiple Access, network according to 3GPP, 3rd Generation Partnership Project, standard protocol, wherein the method comprises:
sending, by a system control module of a personal computer software, a video phone SETUP instruction to a network card control interface module on the network card side, after a user initiates a video phone call on a personal computer;
wherein after receiving the video phone SETUP instruction from the system control module, the network card control interface module triggers a WCDMA wireless network card for a personal computer and starts a series of radio bearer establishment processes according to the 3GPP standard protocol;
and wherein after the radio bearer is established, the wireless network card sends the video phone SETUP instruction to a Core Network, CN,
establishing, by an equipment on the local side, a physical path between an equipment on the opposite side and itself through the network card (S102);
performing, by the equipment on the local side, interaction of control signals with the equipment on the opposite side through the established physical path and establishing a video phone path (S104);
transmitting, by the equipment on the local side, the video signals and/or audio signals collected by itself to the equipment on the opposite side through the established video phone path and receiving video signals and/or audio signals from the equipment on the opposite side through the video phone path (S106).

2. The method as claimed in claim 1, wherein the establishing by the equipment on the local side a physical path between the equipment on the opposite side and itself through a WCDMA wireless network card for a personal computer specifically comprises:
establishing, by the equipment on the local side, a radio bearer between a core network and itself through a WCDMA wireless network card for a personal computer;
establishing, by the equipment on the local side, a physical path between the equipment on the opposite side and itself through the core network.

3. The method as claimed in claim 1, wherein the transmitting by the equipment on the local side the video signals and/or audio signals obtained by itself to the equipment on the opposite side specifically comprises:
receiving the video signals and/or audio signals through a video input/ output, I/O equipment and/or an audio I/O equipment by the equipment on the local side;
encoding the received video signals and/or audio signals by the equipment on the local side;
multiplexing, by the equipment on the local side, the encoded video signals and/or the audio signals, using the multiplexed video signals and/or audio signals as the collected video signals and/or audio signals, and transmitting them to the equipment on the opposite side through the video phone path.

4. The method as claimed in claim 1, wherein the receiving the video signals and/or audio signals from the equipment on the opposite side by the equipment on the local side specifically comprises:
receiving the video signals and/or audio signals from the equipment on the opposite side and de-multiplexing them by the equipment on the local side; and
decoding the de-multiplexed video signals and/or audio signals by the equipment on the local side.

5. The method as claimed in claim 4, further comprising: playing the decoded video signals and/or audio signals by the equipment on the local side.

6. An apparatus for realizing a video phone in a WCDMA network according to 3GPP standard protocol, the apparatus comprising:
a system control module, used to send a video phone SETUP instruction to a network card control interface module on the network card side, after a user initiates a video phone call on a personal computer;
wherein after receiving the video phone SETUP instruction from the system control module, the network card control interface module triggers a WCDMA wireless network card for a personal computer and starts a series of radio bearer establishment processes according to the 3GPP standard protocol; wherein after the radio bearer is established, the wireless network card sends the video phone SETUP instruction to a Core Network, CN, a first establishment module (10), used to establish a physical path between an equipment on the opposite side and itself through the network card;
a second establishment module (20), used to perform interaction of control signals with the equipment on the opposite side through the established physical path and establish a video phone path; and
a signal transceiver module (30), used to transmit video signals and/or audio signals to the equipment on the opposite side and receive the video signals and/or audio signals from the equipment on the opposite side through the video phone path established by the second establishment module.

7. The apparatus as claimed in claim 6, further comprising:
an audio codec module (40), used to encode the audio signals to be transmitted and decode the received audio signals;
a video codec module (50), used to encode the video signals to be transmitted and decode the received video signals; and
a multiplexing/de-multiplexing module (60), used to multiplex the audio signals and/or video signals encoded by the audio codec module and the video codec module and transmit them to the signal transceiver module, and used to de-multiplex the audio signals and/or video signals coming from the signal transceiver module and transmit them to the audio codec module and the video codec module.

8. The apparatus as claimed in claim 7, further comprising:
an audio input/output, I/O equipment (70), used to collect audio signals and transmit the collected audio signals to the audio codec module (40);
a video I/O equipment (80), used to collect video signals and transmit the collected video signals to the video codec module (50).

9. The apparatus as claimed in claim 7, further comprising a play module (90) for playing the audio signals and/or video signals decoded by the audio codec module (40) and the video codec module (50).

## Patentansprüche

1. Verfahren zur Realisierung eines Videotelefons in einem WCDMA-Netzwerk (Wideband Code Division Multiple Access-Netzwerk) gemäß 3GPP, 3rd Generation Partnership Project, Standardprotokoll, wobei das Verfahren umfasst:
Senden, durch ein Systemsteuermodul einer Personal Computer-Software, eines Videotelefon-SETUP-Befehls an ein Netzwerkkarten-Steuerschnittstellenmodul auf der Netzwerkkartenseite, nachdem ein Benutzer einen Videotelefonanruf auf einem Personal Computer initiiert hat;
wobei, nach Empfangen des Videotelefon-SETUP-Befehls von dem Systemsteuermodul, das Netzwerkkarten-Steuerschnittstellenmodul eine drahtlose WCDMA-Netzwerkkarte für einen Personal Computer auslöst und eine Reihe von Funkträgeraufbauprozessen gemäß dem 3GPP-Standardprotokoll startet;
und wobei, nachdem der Funkträger eingerichtet ist, die drahtlose Netzwerkkarte den Videotelefon-SETUP-Befehl an ein Kernnetzwerk, CN, sendet,
Einrichten, durch ein Gerät auf der lokalen Seite, eines physischen Pfads zwischen einem Gerät auf der gegenüberliegenden Seite und sich selbst durch die Netzwerkkarte (S102);
Durchführen, durch das Gerät auf der lokalen Seite, einer Interaktion von Steuersignalen mit dem Gerät auf der gegenüberliegenden Seite durch den eingerichteten physischen Pfad und Einrichten eines Videotelefonpfads (S104);
Übertragen, durch das Gerät auf der lokalen Seite, der Videosignale und/oder Audiosignale, die durch dieses selbst erfasst wurden, an das Gerät auf der gegenüberliegenden Seite durch den eingerichteten Videotelefonpfad und Empfangen von Videosignalen und/oder Audiosignalen von dem Gerät auf der gegenüberliegenden Seite durch den Videotelefonpfad (S106).

2. Verfahren nach Anspruch 1, wobei das Einrichten, durch das Gerät auf der lokalen Seite, eines physischen Pfads zwischen dem Gerät auf der gegenüberliegenden Seite und sich selbst durch eine drahtlose WCDMA-Netzwerkkarte für einen Personal Computer insbesondere umfasst:
Einrichten, durch das Gerät auf der lokalen Seite, eines Funkträgers zwischen einem Kernnetzwerk und sich selbst durch eine drahtlose WCDMA-Netzwerkkarte für einen Personal Computer;
Einrichten, durch das Gerät auf der lokalen Seite, eines physischen Pfads zwischen dem Gerät auf der gegenüberliegenden Seite und sich selbst durch das Kernnetzwerk.

3. Verfahren nach Anspruch 1, wobei das Übertragen, durch das Gerät auf der lokalen Seite, der Videosignale und/oder Audiosignale, die es selbst erhalten hat, an das Gerät auf der gegenüberliegenden Seite insbesondere umfasst:
Empfangen der Videosignale und/oder Audiosignale durch ein Videoeingangs/- ausgangs-, E/A-, Gerät und/oder ein Audio-E/A-Gerät durch das Gerät auf der lokalen Seite;
Codieren der empfangenen Videosignale und/oder Audiosignale durch das Gerät auf der lokalen Seite;
Multiplexen, durch das Gerät auf der lokalen Seite, der codierten Videosignale und/oder der Audiosignale unter Verwendung der multigeplexten Videosignale und/oder Audiosignale als die erfassten Videosignale und/oder Audiosignale und Übertragen von diesen an das Gerät auf der gegenüberliegende Seite durch den Videotelefonpfad.

4. Verfahren nach Anspruch 1, wobei das Empfangen der Videosignale und/oder Audiosignale von dem Gerät auf der gegenüberliegenden Seite durch das Gerät auf der lokalen Seite insbesondere umfasst:
Empfangen der Videosignale und/oder Audiosignale von dem Gerät auf der gegenüberliegenden Seite und Demultiplexen von diesen durch das Gerät auf der lokalen Seite; und
Decodieren der demultigeplexten Videosignale und/oder Audiosignale durch das Gerät auf der lokalen Seite.

5. Verfahren nach Anspruch 4, weiter umfassend: Wiedergeben der decodierten Videosignale und/oder Audiosignale durch das Gerät auf der lokalen Seite.

6. Vorrichtung zum Realisieren eines Videotelefons in einem WCDMA-Netzwerk gemäß 3GPP-Standardprotokoll, wobei die Vorrichtung umfasst:
ein Systemsteuermodul, das zum Senden eines Videotelefon-SETUP-Befehls an ein Netzwerkkarten-Steuerschnittstellenmodul auf der Netzwerkkartenseite verwendet wird, nachdem ein Benutzer einen Videotelefonanruf auf einem Personal Computer initiiert hat;
wobei, nach Empfangen des Videotelefon-SETUP-Befehls von dem Systemsteuermodul, das Netzwerkkarten-Steuerschnittstellenmodul eine drahtlose WCDMA-Netzwerkkarte für einen Personal Computer auslöst und eine Reihe von Funkträgeraufbauprozessen gemäß dem 3GPP-Standardprotokoll startet; wobei, nachdem der Funkträger eingerichtet ist, die drahtlose Netzwerkkarte den Videotelefon-SETUP-Befehl an ein Kernnetzwerk, CN, sendet,
ein erstes Einrichtungsmodul (10), das zum Einrichten eines physischen Pfads zwischen einem Gerät auf der gegenüberliegenden Seite und sich selbst durch die Netzwerkkarte verwendet wird;
ein zweites Einrichtungsmodul (20), das zum Durchführen einer Interaktion von Steuersignalen mit dem Gerät auf der gegenüberliegenden Seite durch den eingerichteten physischen Pfad und Einrichten eines Videotelefonpfads verwendet wird; und
ein Signal-Transceiver-Modul (30), das zum Übertragen von Videosignalen und/oder Audiosignalen an das Gerät auf der gegenüberliegenden Seite und Empfangen der Videosignale und/oder Audiosignale von dem Gerät auf der gegenüberliegenden Seite durch den Videotelefonpfad, der durch das zweite Einrichtungsmodul eingerichtet wurde, verwendet wird.

7. Vorrichtung nach Anspruch 6, weiter umfassend:
ein Audio-Codec-Modul (40), das zum Codieren der zu übertragenden Audiosignale und Decodieren der empfangenen Audiosignale verwendet wird;
ein Video-Codec-Modul (50), das zum Codieren der zu übertragenden Videosignale und Decodieren der empfangenen Videosignale verwendet wird; und
ein Multiplex/Demultiplex-Modul (60), das zum Multiplexen der durch das Audio-Codec-Modul und das Video-Codec-Modul codierten Audiosignale und/oder Videosignale und Übertragen von diesen an das Signal-Transceiver-Modul verwendet wird und zum Demultiplexen der Audiosignale und/oder Videosignale, die von dem Signal-Transceiver-Modul kommen, und Übertragen von diesen an das Audio-Codec-Modul und das Video-Codec-Modul verwendet wird.

8. Vorrichtung nach Anspruch 7, weiter umfassend:
einen Audioeingang/-ausgang,
ein E/A-Gerät (70), das zum Erfassen von Audiosignalen und Übertragen der erfassten Audiosignale an das Audio-Codec-Modul (40) verwendet wird;
ein Video-E/A-Gerät (80), das zum Erfassen von Videosignalen und Übertragen der erfassten Videosignale an das Video-Codec-Modul (50) verwendet wird.

9. Vorrichtung nach Anspruch 7, weiter umfassend ein Wiedergabemodul (90) zum Wiedergeben der Audiosignale und/oder Videosignale, die von dem Audio-Codec-Modul (40) und dem Video-Codec-Modul (50) decodiert wurden.

## Revendications

1. Procédé de réalisation d'un visiophone dans un réseau à accès multiples et à division de code à large bande WCDMA selon le protocole standard de projet de partenariat de 3^{ème} génération 3GPP, dans lequel le procédé comprend :
l'envoi, par un module de commande de système d'un logiciel d'ordinateur personnel, d'une instruction de visiophone SETUP à un module d'interface de commande de carte réseau du côté carte réseau, après qu'un utilisateur a initié un appel de visiophone sur un ordinateur personnel, dans lequel, après réception de l'instruction de visiophone SETUP du module de commande du système, le module d'interface de commande de carte réseau déclenche une carte réseau sans fil WCDMA pour un ordinateur personnel et démarre une série de processus d'établissement de porteuse radio selon le protocole standard 3GPP ;
et dans lequel, une fois que la porteuse radio est établie, la carte réseau sans fil envoie l'instruction de visiophone SETUP à un réseau central CN,
l'établissement, par un équipement du côté local, d'un trajet physique entre un équipement du côté opposé et lui-même à travers la carte réseau (S102) ;
la réalisation, par l'équipement du côté local, d'une interaction de signaux de commande avec l'équipement du côté opposé à travers le trajet physique établi et l'établissement d'un trajet de visiophone (S104) ;
la transmission, par l'équipement du côté local, des signaux vidéo et/ou des signaux audio recueillis par lui-même sur l'équipement du côté opposé à travers le trajet de visiophone établi et la réception de signaux vidéo et/ou de signaux audio de l'équipement du côté opposé à travers le trajet de visiophone (S106).

2. Procédé selon la revendication 1, dans lequel l'établissement par l'équipement du côté local d'un trajet physique entre l'équipement du côté opposé et lui-même à travers une carte réseau sans fil WCDMA pour un ordinateur personnel comprend de manière spécifique :
l'établissement, par l'équipement du côté local, d'une porteuse radio entre un réseau central et lui-même à travers une carte réseau sans fil WCDMA pour un ordinateur personnel ;
l'établissement, par l'équipement du côté local, d'un trajet physique entre l'équipement du côté opposé et lui-même à travers le réseau central.

3. Procédé selon la revendication 1, dans lequel la transmission par l'équipement du côté local des signaux vidéo et/ou des signaux audio obtenus par lui-même à l'équipement du côté opposé comprend de manière spécifique :
la réception des signaux vidéo et/ou des signaux audio à travers un équipement d'entrée/sortie I/O vidéo et/ou d'un équipement I/O audio par l'équipement du côté local ;
le codage des signaux vidéo et/ou des signaux audio reçus par l'équipement du côté local ;
le multiplexage par l'équipement du côté local des signaux vidéo et/ou des signaux audio codés en utilisant les signaux vidéo et/ou les signaux audio multiplexés comme signaux vidéo et/ou signaux audio recueillis et leur transmission à l'équipement du côté opposé à travers le trajet du visiophone.

4. Procédé selon la revendication 1, dans lequel la réception des signaux vidéo et/ou des signaux audio de l'équipement du côté opposé par l'équipement du côté local comprend spécifiquement :
la réception des signaux vidéo et/ou des signaux audio de l'équipement du côté opposé et leur démultiplexage par l'équipement du côté local ; et
le décodage des signaux vidéo et/ou des signaux audio démultiplexés par l'équipement du côté local.

5. Procédé selon la revendication 4, comprenant en outre : la reproduction des signaux vidéo et/ou des signaux audio décodés par l'équipement du côté local.

6. Appareil pour réaliser un visiophone dans un réseau WCDMA selon le protocole standard 3GPP, l'appareil comprenant :
un module de commande de système utilisé pour envoyer une instruction de visiophone SETUP à un module d'interface de commande de carte réseau du côté carte réseau, une fois qu'un utilisateur a initié un appel de visiophone sur un ordinateur personnel ;
dans lequel, après réception de l'instruction de visiophone SETUP du module de commande de système, le module d'interface de commande de carte réseau déclenche une carte réseau sans fil WCDMA pour un ordinateur personnel et démarre une série de processus d'établissement de porteuses radio selon le protocole standard 3GPP ; dans lequel, une fois que la porteuse radio a été établie, la carte réseau sans fil envoie l'instruction de visiophone SETUP à un réseau central CN,
un premier module d'établissement (10) utilisé pour établir un trajet physique entre un équipement du côté opposé et lui-même à travers la carte réseau ;
un second module d'établissement (20) utilisé pour effectuer une interaction des signaux de commande avec l'équipement du côté opposé à travers le trajet physique établi et établir un trajet de visiophone ; et
un module émetteur-récepteur de signal (30) utilisé pour transmettre des signaux vidéo et/ou des signaux audio à l'équipement du côté opposé et recevoir les signaux vidéo et/ou les signaux audio de l'équipement du côté opposé à travers le trajet de visiophone établi par le second module d'établissement.

7. Appareil selon la revendication 6, comprenant en outre :
un module codec audio (40) utilisé pour coder les signaux audio à transmettre et décoder les signaux audio reçus ;
un module codec vidéo (50) utilisé pour coder les signaux vidéo à transmettre et décoder les signaux vidéo reçus ; et
un module de multiplexage/démultiplexage (60) utilisé pour multiplexer les signaux audio et/ou les signaux vidéo codés par le module codec audio et le module codec vidéo et les transmettre au module émetteur-récepteur de signaux, et utilisé pour démultiplexer les signaux audio et/ou les signaux vidéo venant du module émetteur-récepteur de signaux et les transmettre au module codec audio et au module codec vidéo.

8. Appareil selon la revendication 7, comprenant en outre :
un équipement d'entrée/sortie I/O audio (70) utilisé pour recueillir des signaux audio et transmettre les signaux audio recueillis au module codec audio (40) ;
un équipement I/O vidéo (80) utilisé pour recueillir des signaux vidéo et transmettre les signaux vidéo recueillis au module codec vidéo (50).

9. Appareil selon la revendication 7, comprenant en outre un module de reproduction (90) pour reproduire les signaux audio et/ou les signaux vidéo décodés par le module codec audio (40) et le module codec vidéo (50).
